Europäisches Patentamt

European Patent Office

Office européen des brevets

(19)

(11) Publication number: **0 003 381**

**A1**

(12)

# EUROPEAN PATENT APPLICATION

(21) Application number: 79200033.3

(51) Int. Cl.²: **B 60 B 33/02**

(22) Date of filing: 19.01.79

(30) Priority: 23.01.78 NL 7800769

(43) Date of publication of application:
08.08.79 Bulletin 79/16

(84) Designated contracting states:
BE DE FR GB IT NL

(71) Applicant: SKF Nederland B.V.
P.O. Box 37 Wageningselaan 2
NL-3900 AA Veenendaal(NL)

(72) Inventor: Timmer, Hendrikus Jacobus Maria
Dr. Hoogenboomlaan 4
Tiel(NL)

(74) Representative: Merkelbach, B.
SKF Engineering & Research Centre B.V. P.O. Box 50
Plettenburgerweg 6A
NL-3430 AB Nieuwegein(NL)

(54) **Castor-wheel provided with universal activated locking device.**

(57) The invention relates to a castor (1) which comprises a locking device that can be actuated by different types of mechanisms, i.e. the locking device can be universally actuated. Therefore the castor comprises a locking device provided with a slide-like locking member (9) which is hooked shaped and guided so as to be radially moveable in a housing (4) fixed to one of the parts (3) of the castor and is urged in one direction. One end (10) of the slide being adapted to fit into recess (11) and the end portion at the other end (12) being bent. One or more apertures (18, 21) are provided in the housing, and different means provided for moving the slide. These means may be formed separated or in combination by a cable, draw-rod (17), pedal (32) or the like.

fig-1

EP 0 003 381 A1

0003381

SKF Nederland B.V., Veenendaal                    NL 78 001 EU
                                                  BM:1b


Castor-wheel provided with universal activated locking
device

The invention relates to a castor comprising a first part
in which the wheel is mounted and a second part on which
the first part is mounted so that it can swivel, and means
for locking the swivelling movement of the first part in at
least one position of the castor, the said means comprising
a locking device movable mounted on one of said parts and
adapted to fit into a recess in the other part.

A lockable castor of this type is desired when carriages
provided with castors are required to be not only highly
manoeuvrable but also capable of running as coupled trains.

According to known castor arrangements/this type (British
patent 851.157) the locking device is formed by a pawl
adapted to turn on a horizontal pivot mounted in one of the
parts of the castor. The US patent 3.026.558 discloses a
locking device comprising a plunjer mechanism, which can be
activated by a lever.
The main disadvantage of known locking device being the
fact that it can only be actuated by one type of mechanism,
e.g. by or a pedal or a lever or a cable.

The object of the invention is to provide a castor of the
type described whereby the same locking device can be
actuated by different types of mechanisms, i.e. the locking
device can be universally actuated.

This object is achieved by the measure that said locking device comprises a slide-like locking member which is hooked shaped and guided so as to be radially moveable in a housing fixed to one of the parts of the castor and is urged in one direction by a spring, one end of the slide being adapted to fit into recess and the end portion at the other end being bent such that the end edge of the slide is displaced above or below the plane of the slide while the bent part of the hook projects from the housing, one or more apertures being provided in the housing, and different means being provided for moving the slide against the force of said spring. The means for moving the slide may be formed separated or in combination by a cable, draw-rod, pedal or the like which are fastened to the bent part of said hooked-slide.

Additionally or instead of this, means may be provided in the form of a wedge-shaped rod adapted to be pushed through an aperture in a side-wall of the housing, the said aperture being located at the level of the end edge of the hooked end portion of the slide and the portion of the slide adjacent to its end edge partly overlapping said aperture.

Instead of the above-mentioned wedge-shaped rod, means for moving the slide may be provided in the form of a cam located within the housing, with a shaft through an aperture in the upper part of the housing, and means for rotating the shaft with the cam connected thereto, the cam supports against the end part of said hooked slide such that on rotating the shaft the surface of the cam can gradually push said end away.

A bearing element may advantageously be located in the bent portion of said hooked slide.
In this case means for moving the slide may be formed by at least one cam on a shaft mounted in the bearing element and means for rotating the shaft, so that the cam surface can push against the end edge of a lateral part of the housing facing the cam.

The end edge of the lateral part may have a somewhat curved form and the cam surface can have two parts positioned mainly in a right angle to each other, each of which is curved to a complementary shape.

The means for moving the slide may also be formed by a shaft or rod mounted in the bearing element and projecting at at least one end from the bearing-element, and a cam rotatably mounted in at least one aperture in a lateral part of the housing, with a cam surface bearing against the inner edge of the shaft or rod, which on moving upwards or downwards, can force the shaft or rod radially outwards.

The present invention will now be described in detail with reference to the drawings.

Fig. 1 is a perspective view of a castor with a locking means in accordance with the invention.

Fig. 2 is a sectional view along the line II-II in fig. 1.

Fig. 3 is a sectional view according to fig. 2 showing slide moving means having the form of a wedge-shaped rod.

Fig. 4 is a sectional view according to fig. 2 showing slide moving means in the form of a cam located in the housing.

Fig. 5 is a sectional view according to fig. 2 showing slide moving means in the form of a cam mounted in a bearing element.

Fig. 6 shows an alternative embodiment of the cam shown in Fig. 5, and

Fig. 7 is a sectional view according to fig. 2 showing a cam mounted on the housing.

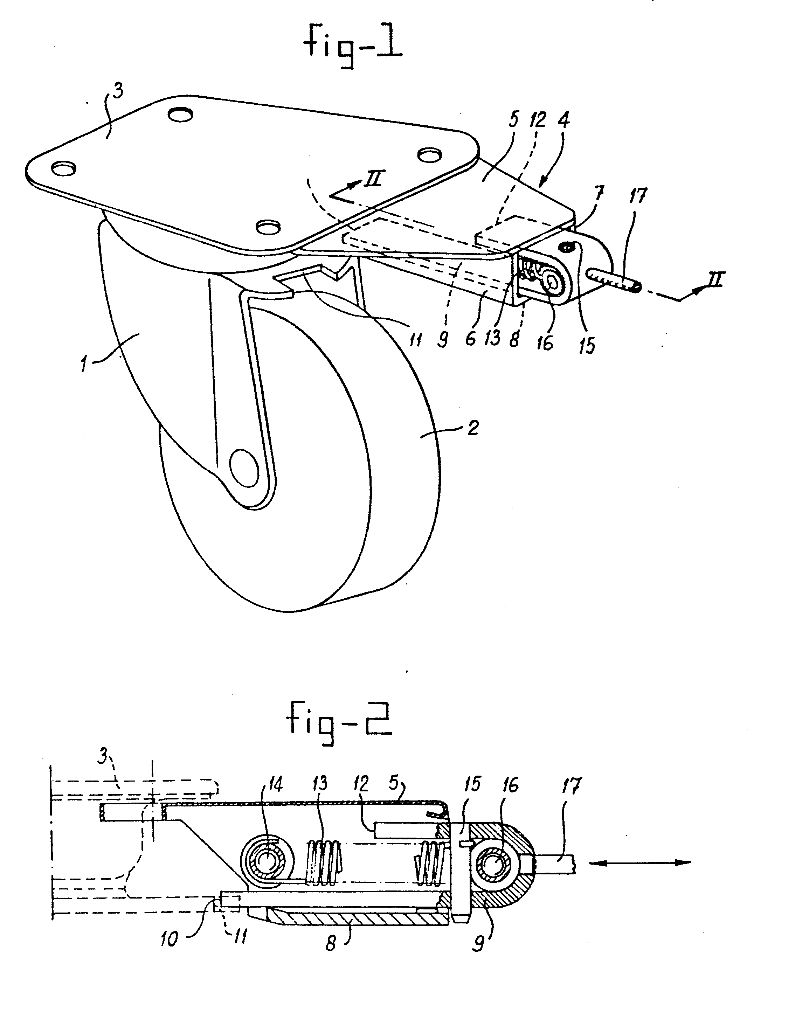

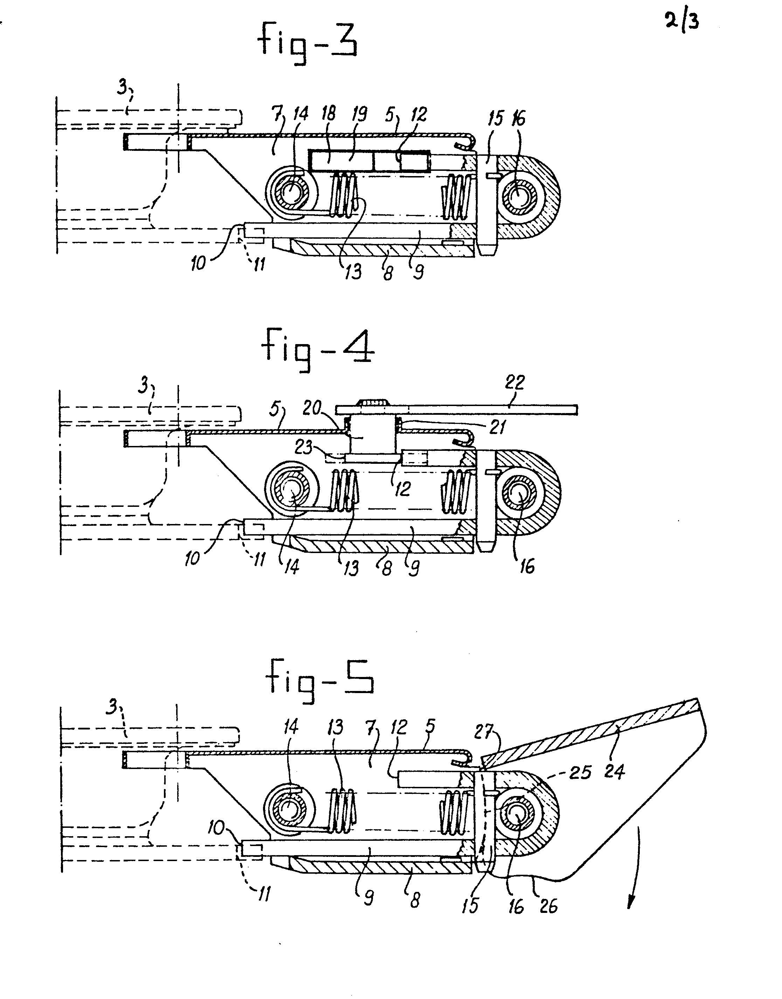

As shown in figs. 1 and 2, the castor comprises a first part in the form of a swivelling fork 1 in which a wheel 2 is
mounted and a second part 3 which is, for example, adapted
to be fastened to a truck and to which the fork 1 is
fastened so that it can swivel. A housing 4 is mounted on
the upper part 3 and has an upper member 5, two side members
6 and 7 and a bottom part 8.

A slide-like member 9 is moveably guided in housing 4. End
part 10 of slide 9 is adapted to fit into recess 11 in
swivelling fork 1, so that the swivelling movement of wheel
2 can be locked. The other end of hooked slide 9 is bent,
such that the other end part 12 is displaced above the
surface of the slide. Slide 9 is urged inwards by means of
spring 13, one end of the spring is fasten to housing 4 at
point 14 and the other end to a pin 15 which passes through
slide 9, pin 15 thus at the same time can serve as a stop
for determining the outermost position of the slide thereby
supporting against the lateral part of housing 4.

A bearing-member 16 is located in the bent part of hooked
slide 9.

A cable or draw-rod 17 is fixed to the slide, by means of
which the slide can be pushed (to the right) against the
force of the spring so that end part 10 of slide 9 is
released from the recess 11.

As shown in fig. 3, a slot-shaped aperture 18 is located in
the side part 7 of housing 4. Through said aperture a wedge-
shaped rod 19 can be pushed into the housing from outside.
By this the end part 12 of the curved part of said slide is
pushed to the right in the drawing, whereby the end part 10
is released from recess 11.

As shown in fig. 4, also a cam-like member 20 can be applied
mounted in aperture 21 of top part 5 of housing 4. Member 20 being rotatable by means of handle 22. Member 20 comprises a cam surface 23 which supports against the end edge 12 of the bent part of slide 9 and being shaped such that on rotation of cam 20 slide 9 is moved to the right, by means of which end part 10 of slide 9 is released of recess 11.

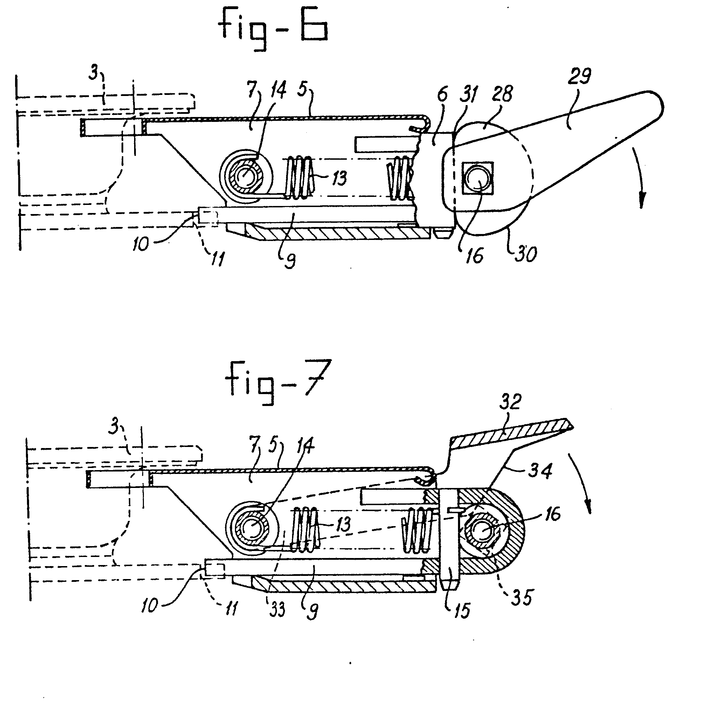

Fig. 5 shows the application of a foot-pedal 24 which is rotatably mounted in a bearing element 16. The foot-pedal comprises a cam surface consisting of two parts 25 and 26 positioned mainly in a right angle to each other. Parts 25 and 26 have a somewhat curved form which is complementary to the curve of edge 27 of lateral part 7 of housing 4. On moving the pedal 24 downwards cam surface portion 25 presses against edge 27, by means of which slide 9 is moved to the right until cam surface portion 26 supports against edge 27, which prevents pedal 24 springing up again.

In fig. 6 a member 28 is rotatably mounted in bearing-element 16 while it can be turned by means of lever 29, so that its surface 30 supports against edge 31 of side-wall 6 of housing 4, by means of which slide 9 is moved to the right and end part 10 of the slide is released.

Finally, fig. 7 shows the application of a foot-pedal 32 which is pivotably mounted in apertures 33 in side-parts 6 and 7 of housing 4 and provided with a cam surface 34. This surface can cooperate with a rod. 35 fastened in bearing-ment 16, so that on moving down pedal 32 cam surface 34,ele- rod 35 and slide 9 are moved to the right, causing the release of end part 10 of said slide.

The locking device for the swivelling movement of the castor as herein before described has a compact structure, mainly due to the designs of a slide and housing, and does not project above the mounting surface of the support portion 3 of the castor. The slide is light but stiff and can be easily moved in horizontal direction. It can absorb relatively large forces in the transverse direction mainly due to its improved guidance, so that the castor can be locked with scarcely any play. The hooked shaped slide member can be activated in various ways, manually or automatically, therefore due to the invention a wide field for applying said castor is obtained.

CLAIMS

1. A castor comprising a first part in which the wheel is mounted and a second part on which the first part is mounted so that it can swivel, and means for locking the swivelling movement of the first part in at least one position of the castor, the said means having a locking device movable mounted on one of the parts which is adapted to fit into a recess in the other part, wherein the locking device comprises a slide-like locking member which is hooked shaped and guided so as to be radially moveable in a housing fixed to one of the parts of the castor and is urged in one direction by a spring, one end of the slide being adapted to fit into said recess and the end portion at the other end being bent such that the end edge of the slide is displaced above or below the plane of the slide, while the bent part of the hook projects from the housing, one or more apertures being provided in the housing, and different means being provided for moving the slide against the force of said spring.

2. A castor in accordance with claim 1, wherein means for moving the slide is formed by a cable, draw-member or the like which is connected to the hooked shaped slide.

3. A castor in accordance with claim 1 or 2, wherein means for moving the slide is formed by a wedge-shaped rod adapted to be pushed through an aperture in a side-wall of the housing, the said aperture being located at the level of the end edge of the end part of the hooked-slide and the portion of the slide adjacent to its end edge partly overlapping the said aperture.

4. A castor in accordance with claim 1 or 2, wherein means for moving the slide is formed by a cam located within the housing, with a shaft through an aperture in the upper part

8    0003381

of the housing, and means for rotating the shaft with the cam connected thereto, the cam supports against the end part of the hooked slide, so that on rotating the shaft the cam can gradually push said end part.

5. A castor as claimed in claims 1 - 4, wherein a bearing-element is located in the bent part of said hooked slide.

6. A castor in accordance with claim 5, wherein means for moving the slide is formed by at least one cam on a shaft mounted in said bearing-element and means for rotating said cam such that said cam surface can push against the end part of a lateral part of the housing facing said cam.

7. A castor in accordance with claim 6, wherein the end part of the lateral part of the housing has a somewhat curved shape and the cam surface of said cam comprises two parts mainly positioned in a right angle to each other, each part being curved to a complementary shape.

8. A castor in accordance with claim 5, wherein means for moving the slide is formed by a shaft or rod mounted in the bearing-element and projecting at at least one end from the bearing-element and a cam rotatably mounted in at least one aperture in a lateral face of the housing with a cam surface supporting against the inner part of the shaft or rod which on moving said cam upwards or downwards can push said shaft or rod radially outwards.

# fig-1

# fig-2

fig-3

fig-4

fig-5

Fig-6

Fig-7

0003381

## European Patent Office

## EUROPEAN SEARCH REPORT

Application number

EP 79 20 0033

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| X | <u>DE - A -2 310 777</u> (SCHULTE)<br>* Page 7, line 1 - page 9, line 8; figure 1 *<br>--- | 1,6,8 | B 60 B 33/02 |
| | <u>FR - A - 2 296 786</u> (HEINRICH BLICK-LE)<br>* Page 1, lines 20-25; figures 1,3 *<br>--- | 1,3 | |
| A | <u>US - A - 4 028 773</u> (MORGAN)<br>* Column 1, line 61 - column 4, line 44; figures 1,2 *<br>--- | 1 | TECHNICAL FIELDS SEARCHED (Int.Cl.²)<br><br>B 60 B 33/00 |
| A | <u>US - A - 2 154 525</u> (NOROS)<br>* Page 1, right-hand column, line 40 - page 3, left-hand column, line 67; figures 1-8 *<br>--- | 1 | |
| A | <u>US - A - 2 132 973</u> (SCHRECK)<br>* Page 1, right-hand column, line 51 - page 2, left-hand column, line 50; figures 4,5,6 *<br>--- | 1,2 | |
| A | <u>FR - A - 1 600 123</u> (HEINRICH BLICK-LE)<br>* Page 3, lines 7-29; figures 1-5 *<br>& DE - A - 1 816 213<br>--- | 1 | |
| A | <u>US - A - 2 422 892</u> (FORBES)<br>./. | 1 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 19-04-1979 | AYITER |

EPO Form 1503.1  06.78

European Patent Office

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | * Column 1, line 54 – column 3, line 48; figures 1-6 * | | |
| | --- | | |
| A | CH – A – 385 038 (COSMOS) <br> * Page 1, lines 39-73; figures 1-3 * | 1 | |
| | --- | | |
| A | DE – A – 1 900 553 (SCHULTE) <br> * Page 2, line 7 – page 7, line 3; figures 1-5 * | 1 | TECHNICAL FIELDS SEARCHED (Int. Cl.²) |
| | --- | | |
| A | FR – A – 1 510 522 (ALBERT SCHULTE) <br> * Page 1, right-hand column, line 20 – page 2, line 11; figures 1,2 * <br> & NL – A – 67 01978 | 1 | |
| | --- | | |
| D | US – A – 3 026 558 (MULHOLLAND) <br> * Column 3, line 30 – column 4, line 4; figures 1,3 * | 1,8 | |
| | --- | | |
| D | GB – A – 851 157 (HOMA) <br> * Page 3, lines 51-72; figures 1-4 * | 1,4,6 | |
| | ----- | | |